Europäisches Patentamt

European Patent Office

Office européen des brevets

(19)

(11) Numéro de publication: **0 258 917 B1**

## (12) FASCICULE DE BREVET EUROPEEN

(45) Date de publication de fascicule du brevet:
16.10.91

(51) Int. Cl.⁵: **G01S 13/34, G01S 7/02**

(21) Numéro de dépôt: 87201466.7

(22) Date de dépôt: **31.07.87**

(54) **Radar à onde continue modulée en fréquence pour mesure de distance.**

(30) Priorité: **27.08.86 FR 8612132**

(43) Date de publication de la demande:
**09.03.88 Bulletin  88/10**

(45) Mention de la délivrance du brevet:
**16.10.91 Bulletin  91/42**

(84) Etats contractants désignés:
**DE FR GB IT SE**

(56) Documents cités:
**EP-A- 0 118 342**
**EP-A- 0 138 253**
**US-A- 2 583 573**
**US-A- 3 113 269**

(73) Titulaire: **TELECOMMUNICATIONS RADIOE-**
**LECTRIQUES ET TELEPHONIQUES T.R.T.**
**88, rue Brillat Savarin**
**F-75013 Paris(FR)**

(84) Etats contractants désignés:
**FR**

Titulaire: **N.V. Philips' Gloeilampenfabrieken**
**Groenewoudseweg 1**
**NL-5621 BA Eindhoven(NL)**

(84) Etats contractants désignés:
**DE GB IT SE**

(72) Inventeur: **Dejaegher, Daniel**
**Societe Civile S.P.I.D 209 rue de l'Université**
**F-75007 Paris(FR)**

(74) Mandataire: **Pyronnet, Jacques et al**
**Société Civile S.P.I.D. 156, Boulevard Haus-**
**smann**
**F-75008 Paris(FR)**

## Description

L'invention concerne un système de radar du type à onde continue modulée en fréquence (FM/CW), destiné à des mesures de distance, comportant connectés en série un générateur de signal hyperfréquence modulé linéairement en fréquence, une antenne émettrice-réceptrice et des moyens de dérivation ayant une voie dite d'oscillation locale et une voie de réception pour prélever respectivement un signal fraction du signal hyperfréquence émis et un signal de l'onde reçue en écho d'une cible et pour transmettre lesdits deux signaux prélevés aux entrées d'un mélangeur qui délibre un signal de battement soustractif utile répresentatif de la distance D de la cible, système, dans lequel les longueurs de lignes de transmission présentes dans lesdites deux voies sont ajustées pour qu'au moins le signal de couplage parasite interne dû à la réflexion d'antenne présente jusqu'au mélangeur le même temps de propagation que le signal de la voie d'oscillation locale.

Les radars à antenne unique sont utilisés, en général, pour des mesures de longues distances. La puissance est, dans ce cas, envoyée par trains d'ondes, ce qui permet de s'affranchir des échos parasites internes du radar. L'invention se propose de réaliser un radar à une seule antenne qui puisse mesurer des distances courtes, de l'ordre de quelques mètres ; elle vise plus particulièrement des sondes radioaltimétriques pouvant être utilisées à bord de missiles et capables de mesurer des distances aussi faibles que 3 mètres.

Les principaux inconvénients des systèmes radars ou radioaltimètres à deux antennes, ceci étant évoqué à titre de problème technique d'arrière plan, sont les suivants : les antennes ne peuvent être intégrées à l'équipement, mais doivent être fixées sur la paroi de l'aéronef porteur et interconnectées avec l'équipement par l'intermédiaire de lignes de transmission dont le délai de transmission doit être calibré, ces lignes pouvant être la source d'erreurs dans la mesure de distance. Par ailleurs, lorsque la distance de séparation des antennes n'est plus négligeable devant l'éloignement du sol ou de l'objet à détecter, la géométrie du système d'antennes devient imparfaite, ce qui résulte encore en une source d'erreurs aux distances faibles. Enfin, il est souhaitable de simplifier le système d'antennes pour des questions de compactage, d'implantation sur l'aéronef et, d'une façon générale, d'économie.

On suppose, dans la suite du texte que le radar émet une onde en dents de scie asymétrique à pente positive constante pour une distance donnée, ces dents de scie, de durée T, étant séparées par des paliers, c'est-à-dire étant produites avec la période de répétition $T_r$($T_r$ supérieur à T, quel que soit T). Dans ces conditions, la formule générale qui exprime le mode de fonctionnement même du radar est :

$$f_b = \frac{\tau . \Delta F}{T} \qquad (1)$$

avec :

$f_b$ : fréquence de battement soustractif entre onde émise et onde reçue en écho ;

$\tau$ : temps de retard entre onde émise et onde reçue en écho ;

$\Delta F$ : excursion de fréquence des signaux émis ou fréquence de wobulation.

La distance D, quant à elle, est en relation linéaire avec le retard $\tau$, conformément à la formule :

$$\tau = \frac{2D}{c} \qquad (2)$$

En combinant les formules (1) et (2) on obtient la formule de base suivante :

$$T = \frac{2\Delta F}{c . f_b} D \qquad (3)$$

c étant la vitesse d'une onde électromagnétique dans l'air. Le signal utile est engendré par un mélangeur qui effectue le battement soustractif entre l'oscillation locale, prélevée sur l'émission et les ondes reçues. Si l'on appelle $V_{OL}$ la tension de l'oscillation locale et $V_R$ celle de l'onde reçue, la tension de sortie de battement $v_b$ du mélangeur est égale à :

$$v_b = K.V_{OL}.V_R.\sin(2\pi f_b t + \phi) \qquad (4)$$

avec :

$$\phi = 2\pi.\tau.F_{min}$$

$F_{min}$ étant la fréquence minimale de l'émetteur et K le coefficient de conversion du mélangeur.

Dans le cas d'une modulation en dents de scie, le signal généralement utilisé dans les radioaltimètres est constitué d'une succession de trains de sinusoïdes, dont la durée est celle des dents de scie, séparés par des paliers. A chaque palier, la tension de battement $v_b$ du mélangeur est fixée sur la valeur :

$$v_b = K.V_{OL}.V_R.\sin \phi \qquad (5)$$

on notera que la période du signal de battement correspond à la récurrence $T_R$ de la wobulation. Son spectre de fréquence est donc composé d'harmoniques de la fréquence :

$$f_R = \frac{1}{T_R}$$

Le spectre du signal de battement peut être calculé par transformée de Fourier à partir de sa forme temporelle. Il représente la densité de puissance aux harmoniques de la fréquence de wobulation $f_R$. A partir de ce calcul, il est possible d'analyser les spectres en faisant varier les différents paramètres et surtout d'observer leur évolution aux courtes distances. Parmi plusieurs options possibles pour le fonctionnement du radar, on choisit de préférence d'ajuster la fréquence de battement $f_b$ des signaux sur la fréquence d'accord fixe $f_{bo}$ du récepteur. Pour les calculs, on donne par exemple à $f_{bo}$ la valeur de 25 kHz. L'analyse des spectres permet de constater les phénomènes suivants :

L'enveloppe du spectre est voisine d'une courbe en

$$\frac{\sin x}{x}$$

centrée sur la fréquence $f_{bo}$ lorsque le nombre n de périodes de la sinusoïde selon la formule (4) ci-dessus est assez grand, pendant la wobulation, et de l'ordre de 10 ou plus, ce nombre n pouvant s'exprimer par :

$$n = f_b.T \qquad (6)$$

ou par :

$$n = \tau.\Delta F \qquad (7)$$

Lorsque le nombre n est égal à quelques unités seulement, la courbe en

$$\frac{\sin x}{x}$$

est déformée et le maximum se décale vers les fréquences basses ; en première approximation, l'erreur relative faite sur la mesure de la distance D est égale à :

$$\frac{\Delta D}{D} = \left| \frac{F_M - f_{bo}}{f_{bo}} \right| \qquad (8)$$

avec :

$F_M$ = fréquence du maximum du spectre.

Pour se maintenir en deçà d'une erreur relative de 10 % sur D, il faut que le nombre n soit supérieur à 3. En d'autres termes, cela signifie que les ondes doivent être reçues avec un retard $\tau$ supérieur à

$$\frac{3}{\Delta F} \text{ [formule (7)]},$$

ou encore, si l'on combine les formules (2) et (7), que la distance minimale $D_{min}$ de l'obstacle ou de la cible doit être égale à :

$$D_{min} = \frac{3}{2} \frac{c}{\Delta F} \qquad (9)$$

Mis à part les inconvénients précités des radars FM/CW à deux antennes, il est démontré que, par contre, le radar à deux antennes répond aisément aux conditions de précision et de sensibilité imposées dans la gamme 4,2 à 4,4 GHz réservée aux radioaltimétres. Notamment, une ligne à retard, placée soit dans la voie d'émission soit dans la voie de réception, résoud le problème de la précision aux altitudes faibles, du fait qu'elle augmente artificiellement la distance de la cible. Dans ce cas, l'emploi d'isolateurs permet de réduire les fuites internes sans atténuer le signal utile et il est ainsi possible de mesurer des distances à partir de zéro. Avec une seule antenne, le problème du bruit d'autoéblouissement est beaucoup plus difficile à résoudre : le radar reçoit, par la même voie, l'onde réfléchie par l'antenne et l'onde utile provenant, en écho, de la cible. L'emploi des isolateurs et d'une ligne à retard est donc alors impossible sans atténuation du signal utile.

La détection des cibles proches par un radar monoantenne est donc un problème intrinsèquement très difficile à résoudre. A titre d'indication, une excursion de fréquence $\Delta F$ de 150 MHz limite la mesure du radar aux distances supérieures à 3 m, lorsqu'on applique la formule (9) ci-dessus. Pour diminuer encore la portée minimale, on peut essayer d'augmenter la valeur de $\Delta F$ mais deux difficultés se présentent alors : d'une part il est difficile d'obtenir une source qui soit linéaire en fréquence sur une large excursion de fréquence, supérieure à 150 MHz. D'autre part, et c'est là le problème essentiel, la phase du coefficient de réflexion de l'antenne n'est pas linéaire sur une large bande passante. A court terme, il semblerait toutefois possible d'obtenir une linéarité convenable de l'ordre de 10 % sur une excursion $\Delta F$ de 300 MHz et une bonne adaptation d'antenne sur 400 MHz avec certains types d'antennes. La distance minimale pourrait alors être rabaissée, au moins théoriquement, à 1,5 m avec un $\Delta F$ de 300 MHz.

Partant des contraintes d'ordre quasiment théorique indiquées ci-dessus, plusieurs techniques sont envisageables pour réaliser un radar monoantenne :

La technique connue du radar dit "pseudo FM/CW" consiste, pour les mesures de courtes distances, à hacher le signal émis en respectant le théorème de l'échantillonnage et à émettre des trains d'onde dont la durée doit être elle aussi très courte, par exemple inférieure à 6,6 ns pour une distance à mesurer de 1 m. Il est encore difficile de réaliser des commutateurs pour signaux hyperfréquence aussi rapides, ce qui constitue une butée technologique pour cette technique. Il a déjà été proposé un radioaltimètre FM/CW dans lequel l'émetteur et le récepteur fonctionnent de façon continue en utilisant une antenne commune. Dans ce radioaltimètre le signal local du mélangeur à radiofréquence du récepteur est obtenu par réflexion du signal transmis par le T.O.S. (Taux d'Onde Stationnaire) de l'antenne. La construction se trouve ainsi notablement simplifiée, mais au détriment de l'altitude minimale mesurable, laquelle ne peut atteindre que 6 à 10 m, c'est-à-dire une valeur trop élevée pour les applications recherchées pour le radar selon la présente invention. On connaît aussi, notamment du brevet français 2 541 465, un radar FM/CW monoantenne destiné en particulier à la mesure de courtes distances et qui pose le même problème technique précis que dans la présente description : dans un équipement radar FM/CW, si le signal émis et le signal réfléchi sont duplexés sur une antenne commune, il se produit un signal parasite de couplage entre l'émetteur et le récepteur ; ce signal composite de couplage résulte principalement d'une réflexion partielle au niveau de l'antenne qui présente un coefficient de réflexion de grandeur finie et non nulle et d'un signal de fuite introduite par le circuit duplexeur dont le coefficient de directivité est technologiquement limité. Il s'ensuit que ce signal composite de couplage à radiofréquence, après démodulation dans le mélangeur d'entrée du récepteur, crée à l'entrée de l'amplificateur à audiofréquence du récepteur des signaux d'interférences qui sont partiellement situés dans la bande passante utile du signal d'écho avec des amplitudes comparables. Il en résulte une limitation de la sensibilité de détection d'un objet rapproché. Pour combattre ce manque de sensibilité il est connu d'effectuer un réglage statique qui consiste à ajuster les longueurs de lignes et éventuellement à régler un déphaseur placé sur l'une de ces lignes pour que la phase de l'oscillation locale coïncide avec celle du principal signal parasite dû au T.O.S. de l'antenne. Le réglage statique est cependant insuffisant à lui seul pour atteindre la précision requise pour des mesures de distances de l'ordre de 1,5 m à 3m.

4

Dans le brevet français précité une mesure complémentaire, pour améliorer la sensibilité du radar, consiste à introduire, après le mélangeur d'entrée de la voie de réception, un amplificateur à audiofréquence ayant une seconde entrée qui est connecté, par l'intermédiaire d'un modulateur de niveau, au générateur du signal de modulation en fréquence de l'émetteur, ce modulateur de niveau ayant une entrée de commande sensible à un signal de tension continue réglable.

Selon la présente invention, les problèmes techniques indiqués ci-dessus sont résolus différemment grâce au fait que le radar FM/CW défini au premier paragraphe est remarquable en ce qu'une boucle d'asservissement de phase comportant un amplificateur et un filtre passe bas est connectée entre la sortie dudit mélangeur et une entrée de commande d'un circuit déphaseur commandé, disposé dans la voie d'oscillation locale, la fréquence de coupure en boucle fermée dudit asservissement étant juste inférieure à la fréquence du signal de battement soustractif utile entre ondes émise et reçue fourni en sortie du mélangeur.

Une telle boucle d'asservissement, conçue et agencée avec soin, permet de compenser de façon quasi instantanée les écarts de phase variables qui existent nécessairement entre certains signaux parasites, tels par exemple le signal de fuite du mélangeur, et le signal d'oscillation locale.

La description qui suit en regard des dessins annexés, le tout donné à titre d'exemple, fera bien comprendre comment l'invention peut être réalisée.

La figure 1 représente en a la forme temporelle du signal de sortie utile du mélangeur représenté sur les figures 3 et 6 et en b le spectre associé.

La figure 2 représente en a et b des courbes analogues à celles de la figure 1, pour une distance d'éloignement D du système de radar plus faible.

La figure 3 est une schéma synoptique d'un premier mode de réalisation du système de radar selon l'invention.

La figure 4 est une diagramme de Fresnel qui permet d'expliciter le fonctionnement du radar.

La figure 5 est un diagramme montrant les performances du radar en fonction de la distance D.

La figure 6 est un schéma synoptique d'un deuxième mode de réalisation du système de radar selon l'invention.

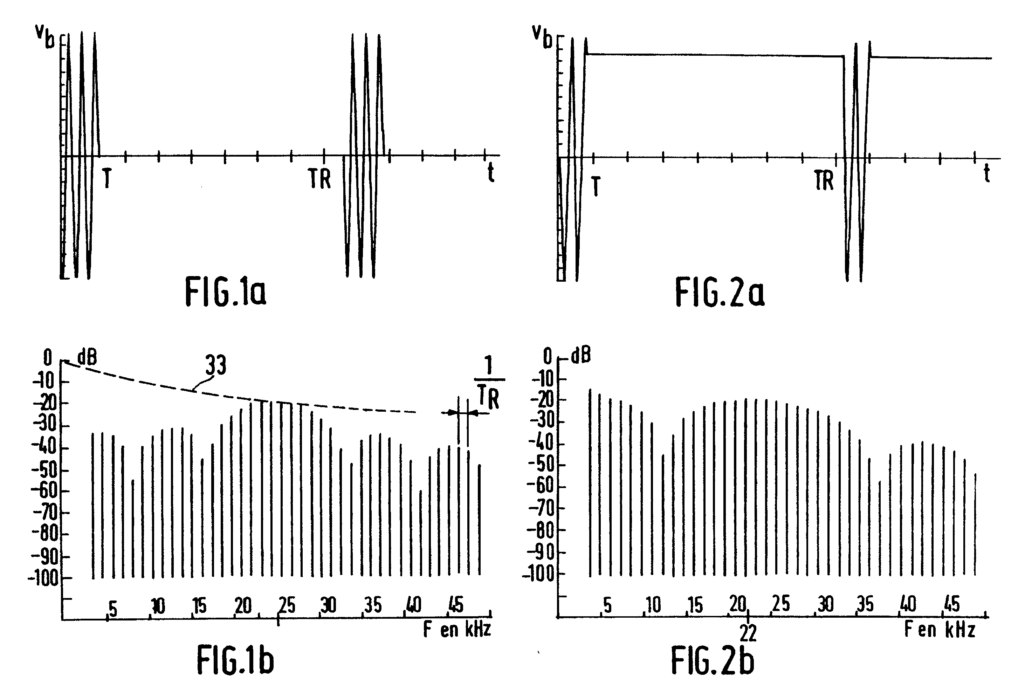

On a vu ci-dessus qu'il n'est pas possible d'introduire une ligne à retard dans un radar mono-antenne, ce qui pose un problème pour la détection des cibles proches puisque le temps de transit de l'onde réfléchie est alors très faible. Ce problème qui est une difficulté d'ordre théorique est illustré par les figures 1 et 2, pour lesquelles la fréquence de wobulation $\Delta F$ a été choisie égale à 150 MHz. A la figure 1 la distance d'éloignement D est égale à 3 m (avec $f_b = 25$ kHz) et le nombre n de sinusoïdes du signal $v_b$ en sortie du mélangeur pendant la durée T, voir figure 1a, égal à 3, conformément à la formule (7) ci-dessus. Le spectre du signal de la figure 1a, représenté à la figure 1b a une enveloppe en

$$\frac{\sin x}{x}$$

et le maximum de ce spectre est obtenu à très peu près pour la fréquence de battement $f_b$ de 25 kHz. On notera qu'il en est ainsi pour n supérieur à 3, c'est-à-dire pour les distances D mesurables supérieures à 3 m dans l'application numérique choisie à titre d'exemple. Par contre, pour n inférieur à 3, soit D inférieur à 3 m, le spectre se déforme et la mesure de D devient imprécise voire impossible. A la figure 2, la distance d'éloignement D est égale à 2 m, $f_b$ étant toujours égale à 25 kHz, et n = 2.

L'enveloppe du spectre de la figure 2b n'est pas assimilable à une fonction en

$$\frac{\sin x}{x}.$$

Si l'on s'en tient à la portion de l'enveloppe qui entoure la fréquence $f_b$ de 25 kHz le maximum local de l'enveloppe n'est plus obtenu pour la fréquence de 25 kHz mais pour 22 kHz ce qui, à supposer que ce maximum soit détecté, entraînerait une erreur sur la distance D de 12 % conformément à la formule (8). Pour un nombre de sinusoïdes inférieur à 2, l'enveloppe du spectre se déforme encore jusqu'à devenir une courbe monotone décroissante, au voisinage de : D = 1 m, à partir de laquelle la mesure de D n'a plus de signification physique. On notera que la valeur de $T_R$ n'a pratiquement pas d'influence sur la forme des spectres des signaux $V_b$.

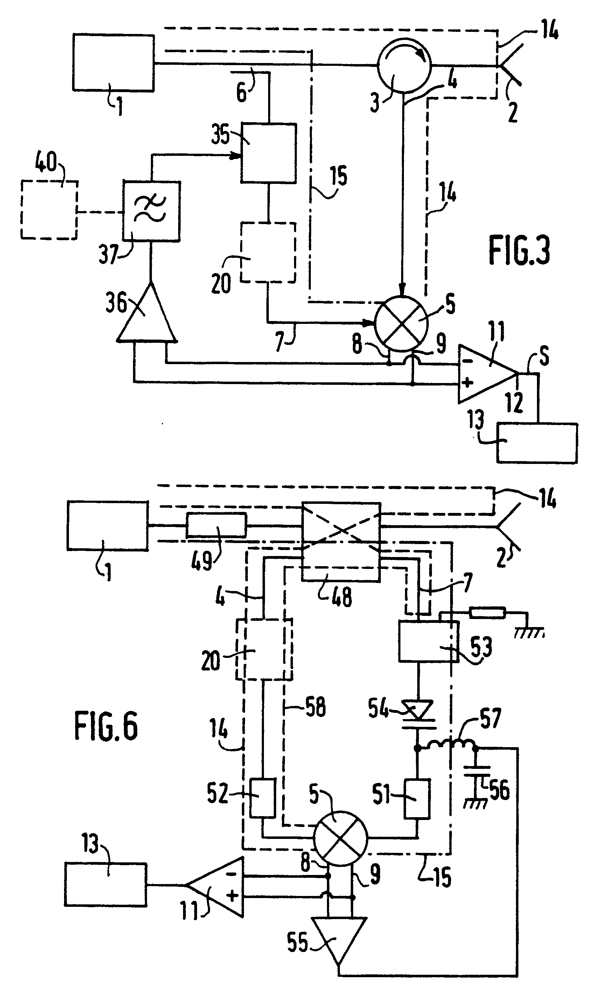

Outre les limitations d'ordre théorique évoquées ci-dessus, une autre difficulté pour la réalisation d'un radar monoantenne résulte de l'importance des signaux parasites dont il convient de ramener le niveau global en dessous de celui du signal utile $v_b$. L'étude de ces signaux parasites et leur traitement est décrit ci-après en relation avec la structure de radar de la figure 3. Une partie de la figure 3 représente un système de radar classique pour la mesure de distances comportant une voie d'émission constituée par un oscillateur commandé par tension (VCO) 1 relié à une antenne 2 par l'intermédiaire d'un circulateur 3. Le VCO 1 est un générateur hyperfréquence qui émet par exemple un signal sous forme d'une dent de scie linéaire en fréquence, asymétrique positive de durée T, entre 4225 et 4375 MHz, soit une fréquence centrale $F_o$ de 4,3 GHz, avec une fréquence de récurrence des dents de scie

$$f_R = \frac{1}{T_R},$$

c'est-à-dire que deux dents de scie consécutives sont séparées par un palier de durée : $T_R$ - T. Une voie de réception est constituée par l'antenne 2 qui est à cet effet une antenne émettrice-réceptrice conçue pour capter le signal d'écho sur le sol ou sur des cibles, et le circulateur 3 dont une sortie est reliée par une ligne 4 à un mélangeur 5, une fraction de l'onde émise par le VCO 1 étant prélevée au moyen d'un coupleur 6 et transmise directement, dans le radar classique, à une deuxième entrée du mélangeur 5 par la ligne dite d'oscillation locale 7. De préférence, le mélangeur 5 est un mélangeur symétrique du type $4\lambda/4$ et sa sortie, qui est double, est transmise, par l'intermédiaire de deux conducteurs 8 et 9 aux entrées négative et positive d'un amplificateur différentiel 11. La sortie 12 de l'amplificateur 11 est le siège d'un signal à audiofréquence S qui comporte, entre autres, le signal utile $v_b$ de fréquence $f_b$ qui est un signal de battement soustractif entre ondes émise et reçue. La sortie 12 est reliée à un circuit de traitement 13 qui effectue la mesure de la distance D. Les moyens de modulation du VCO 1, connus, ne sont pas utiles pour la compréhension de l'invention et n'ont pas été représentés. On précise seulement que la modulation en fréquence doit être obtenue avec une bonne linéarité.

Sans précaution particulière, avec la structure décrite ci-dessus, le bruit serait prépondérant dans le signal S, surtout aux courtes distances et il serait impossible de mesurer la distance D pour les faibles distances. Dans le radar selon la figure 3 le bruit est dû aux couplages parasites dont deux sont dominants : le premier, dont le trajet est schématisé par le trait interrompu 14, est provoqué par la réflexion d'antenne. En considérant un coefficient de réflexion de - 10 dB sur l'antenne, ce couplage parasite est équivalent à un couplage émetteur-récepteur égal à : - 10 dB - 20 logD. Le second couplage parasite provient de la fuite du circulateur 3. Le couplage équivalent est égal à : - 25 dB -20 logD. Un troisième est provoqué par la fuite du mélangeur 5 avec un couplage équivalent de : - 50 dB - 20 logD. L'ensemble de ces trois couplages parasites constitue ce qui est couramment appelé le bruit d'autoéblouissement du radar. Chaque couplage parasite engendre un signal de battement avec le signal d'oscillation locale dont le trajet est schématisé par le trait mixte 15 sur la figure 1, signal ayant pour phase instantanée :

$$\varphi_u = \frac{2\pi . \Delta L_u . F}{c} \qquad (10)$$

expression dans laquelle :

u      est un indice repère du signal de couplage parasite considéré ;

$\Delta L_u$      représente la différence de longueur électrique équivalente entre l'oscillation locale et le couplage parasite considéré ;

F      est la fréquence instantanée du signal émis.

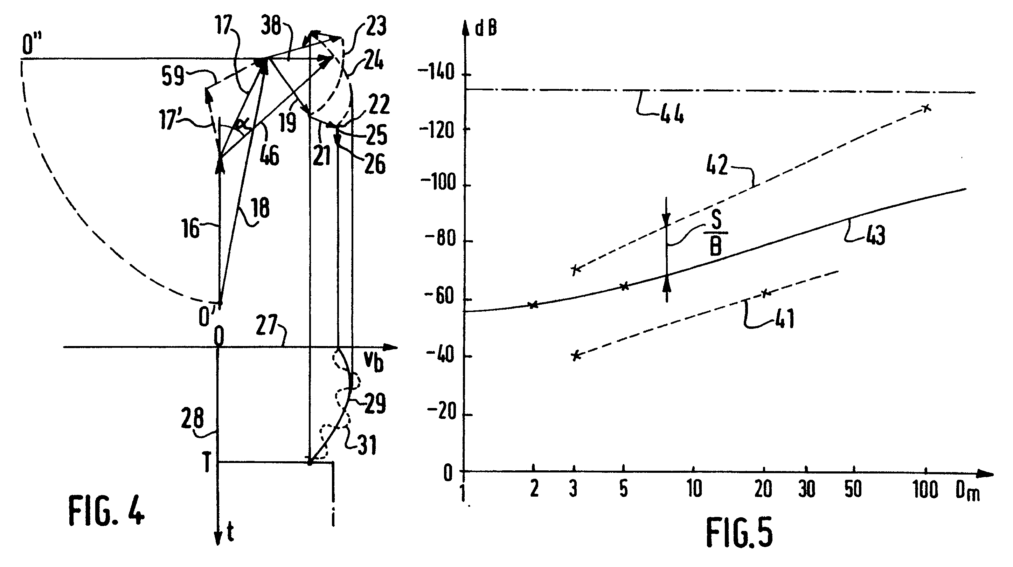

La principale difficulté pour l'extraction du signal utile dans le bruit engendré par les couplages parasites, en sortie du mélangeur 5, est surtout le fait que les principaux signaux de couplages parasites ont des longueurs électriques différentes entre eux et surtout par rapport à l'oscillation locale. Un premier moyen de mise en oeuvre de l'invention est de bien identifier les trajets des principaux couplages parasites et d'agir sur les longueurs électriques de ces trajets pour les rendre, autant que possible, égales à celles du signal d'oscillation locale, ce qu'on désigne par : "réglage ou correction statique", de façon à mettre ces signaux parasites en phase avec le signal d'oscillation locale. Or, ce réglage ne peut être effectué que sur des ondes dont le trajet est indépendant du trajet d'oscillation locale. En conséquence, le troisième signal parasite précité, qui est issu de la fuite du mélangeur, ne peut pas être compensé, ce dernier ayant heureusement le niveau le plus faible des trois. Cet ajustage des longueurs de lignes, notées $l_{OL}$ pour l'oscillation locale et $l_{CP}$ pour les couplages parasites compensables de façon statique, tient naturellement compte des différents éléments hyperfréquence rencontrés sur les différents trajets, chacun de ces éléments ayant une longueur électrique que l'on peut mesurer et qui s'ajoute à la longueur de ligne de transmission réelle le long du trajet considéré. Il est ainsi possible de rabaisser le niveau du signal de réflexion d'antenne à la valeur : - 35 dB - 20 logD et le signal de fuite du circulateur à la valeur : - 50dB - 20 logD. La figure 4 illustre, par un diagramme de Fresnel, l'évolution des différents signaux de battement parasites et utiles, pendant la wobulation, sous forme de vecteurs plus ou moins mobiles par rapport au vecteur d'oscillation locale référencé 16 qui est pris comme vecteur de référence. A partir du sommet du vecteur 16 fixe, on construit le vecteur 17 qui représente la réflexion d'antenne et la fuite du circulateur. Par réglage statique, on fait en sorte que le vecteur 17 reste fixe par rapport au vecteur 16 pendant la wobulation, c'est-à-dire que la résultante 18 de ces deux vecteurs reste fixe elle aussi. De préférence on cherche en outre à aligner les deux vecteurs 16 et 17. Pour cela, en complément du réglage statique, on peut introduire un déphaseur réglable dans voie de réception 4 ou la voie d'oscillation locale 7. Ce déphaseur est représenté en trait interrompu en 20 à la figure 3, dans la voie d'oscillation locale ; il peut être réalisé au moyen d'un condensateur de capacité ajustable fixe. Il faut alors tenir compte de la longueur électrique équivalente du déphaseur 20 pour le réglage statique. A partir du sommet des vecteurs 17 ou 18, on a représenté, figure 4, d'autres vecteurs tels que 19 et 21 qui symbolisent d'autres signaux de couplages parasites ne pouvant pas être calés en phase par rapport au signal d'oscillation locale, c'est-à-dire en avance ou en retard par rapport à ce dernier, tel notamment le signal de fuite du mélangeur 5. Au cours de la wobulation, le sommet du vecteur 19, qui avance par rapport à l'oscillation locale, décrit la courbe 23 alors que le sommet 22 du vecteur 21, qui retarde, décrit la courbe 24. Le point 22 représente l'extrémité du vecteur résultant, à partir de laquelle on peut porter le vecteur représentant le signal utile 25, de faible amplitude par rapport aux précédents. Pendant la wobulation, le vecteur 25, de sommet 26, décrit plusieurs révolutions autour du point 22. Par projection du point 26 sur un axe 27 perpendiculaire au vecteur 16, on obtient l'évolution de la tension $v_b$ recherchée. L'évolution des points 22 et 26 peut être encore mieux visualisée en introduisant un axe des temps aligné sur le vecteur 16. Dans le plan de coordonnées 27 et 28, les points 22 et 26 décrivent respectivement les courbes en trait plein 29 et en trait interrompu 31. En l'absence de couplages parasites, la courbe 31 serait une sinusoïde d'abscisse ot. Atténuer l'effet perturbateur des couplages parasites revient à se rapprocher autant que possible de cette sinusoïde théorique. Pour cela, il faut faire en sorte que la résultante 18 reste fixe et alignée sur le vecteur 16 comme indiqué ci-dessus ; mais pour des vecteurs tels que 19 et 21, d'autres mesures sont nécessaires. La diminution de l'amplitude des vecteurs parasites est un élément favorable à la réalisation de l'invention. En effet, le niveau du signal utile représenté par le vecteur 25 à la figure 4, très faible, peut se calculer à partir de la puissance émise Pe et la puissance reçue $P_r$ selon la formule :

$$P_r = \frac{G.\sigma o.\lambda^2}{(4\pi)^2.D^2} \, Pe \qquad\qquad (11)$$

avec :

G : gain de l'antenne

$\alpha o$ : réflectivité du sol

$\lambda$ : longueur d'onde émise.

Typiquement, le signal utile atteint un niveau de :

- 60 dB - 20 logD. Si l'on compare aux niveaux déjà indiqués ci-dessus pour les principaux signaux parasites, on constate qu'après réglage statique le rapport signal sur bruit S/B a pu être ramené de - 50 dB à - 25 dB mais ceci est insuffisant et il convient d'atteindre un rapport S/B de + 10 dB environ. A titre indicatif, l'enveloppe du spectre des signaux parasites après réglage statique a été représentée en trait interrompu en 33 à la figure 1b, où l'on constate que si on se limite aux raies voisines de la fréquence de battement fb, le rapport S/B est voisin de 0 dB, ce qui est un élément favorable, moyennant un filtrage approprié du signal.

L'invention achève de résoudre le problème technique posé en introduisant en outre une réduction dynamique des couplages parasites sous la forme d'un asservissement de phase entre le sortie 8, 9 du mélangeur 5 et un déphaseur 35, figure 3, inséré de préférence dans la voie d'oscillation locale. Il s'agit d'atténuer l'influence des signaux parasites sans interférer sur le signal utile. Soit $I_s$ la longueur électrique équivalente du couplage utile produit par la réflexion de l'onde sur le sol. On asservit le déphasage :

$$\frac{2\pi(l_{OL}-l_{CP})}{\lambda}$$

sur la valeur $\pi/2$ ou la valeur 0, selon le type de mélangeur utilisé en faisant en sorte de ne pas modifier le déphasage introduit par le signal utile, soit :

$$\frac{2\pi(l_{LO}-l_S)}{\lambda}.$$

A cet effet, le signal audio en sortie du mélangeur 5 commande, après amplification et filtrage le déphaseur 35. Par exemple la sortie double 8, 9 du mélangeur 5 est reliée aux deux entrées d'un amplificateur opérationnel 36 dont la sortie est connectée à un filtre passe-bas 37. La sortie du filtre 37 commande en tension le déphaseur 35. Cet asservissement permet d'obtenir une sensibilité du mélangeur dépendante de la fréquence de battement du signal audio, sensibilité qui est notamment améliorée pour les valeurs faibles de $f_b$. Le filtrage effectué en 37 consiste à ne laisser passer que les fréquences inférieures à la fréquence de battement $f_b$ du signal utile. Notamment, lorsque la fréquence $f_b$ est maintenue à une valeur fbo fixe (25 kHz par exemple) la fréquence de coupure fc du filtre passe-bas 37 doit être inférieure à $f_{bo}$. On obtient ainsi une compensation quasi instantanée de l'effet perturbateur des signaux parasites qui ne peuvent pas être compensés de façon statique. Si l'on se réfère à la figure 4 où la résultante instantanée des signaux parasites cités en dernier lieu est référencée 38, tout se passe comme si le vecteur résultant 18 était, à tout instant, aligné avec le vecteur 38, ce qui améliore notablement le rapport S/B.

Sur la figure 4 ceci se traduit par le passage de 0' à 0" pour l'origine du vecteur 18. Grâce à la compensation dynamique le rapport S/B peut ainsi être rehaussé à une valeur de l'ordre de 10dB comme souhaité. L'amplificateur 36 de la figure 3 peut être un simple amplificateur opérationnel qui intègre aussi la fonction de filtrage du filtre passe-bas 37. Cet amplificateur opérationnel a par exemple une fréquence de coupure de 10 Hz en boucle ouverte et un gain de 100dB. Compte-tenu des facteurs de conversion du mélangeur 5 et du déphaseur 35, la fréquence de coupure en boucle fermée est de 20 kHz. Le filtre est à un seul pôle, soit une caractéristique de gain de 20 dB par décade, ce qui assure à la boucle d'asservissement une bonne stabilité. Un tel asservissement n'affecte pas les signaux utiles, la boucle n'étant fermée que pour les signaux parasites et agissant d'autant plus que la fréquence de battement des signaux parasites est faible c'est-à-dire pour des valeurs de fréquence de battement pour lesquelles le niveau de ces signaux parasites est le plus élevé. Il faut noter que, pour que le déphaseur 35 soit apte à compenser les retards résiduels des échos internes, il faut que le déphasage $\alpha$ entre la résultante des signaux de tension parasites, soit le vecteur 46 à la figure 4, et le signal d'oscillation locale, reste compris dans le domaine d'action du déphaseur. Cette contrainte est satisfaite essentiellement grâce au réglage statique décrit ci-dessus ; les autres ondes parasites, plus faibles, ne peuvent généralement pas créer de déphasage important de l'onde parasite totale. En pratique, le déphaseur 35 peut être réalisé au moyen d'une simple diode, la variation de phase du vecteur 46 étant de l'ordre de $\pi/2$. Si cette variation de phase est appelée à dépasser la valeur $\pi/2$, il faut alors utiliser un déphaseur capable de fonctionner pour une telle variation de phase accrue.

On notera aussi que la fréquence de battement $f_b$ du signal utile n'est pas obligatoirement maintenue à une valeur $f_{bo}$ fixe. Il est connu, dans certains radioaltimètres, de laisser constante l'excursion de fréquence $\Delta F$ et la pente p de la rampe de wobulation ; dans ces conditions, la fréquence de battement $f_b$ est directement proportionnelle à la distance D à mesurer. En fonction des critères précités pour le fonctionnement du filtre 37, il faut alors ajuster la fréquence de coupure $f_c$ du filtre à chaque fréquence $f_b$. En pratique une telle commande du filtre 37 peut être effectuée par le bloc de recherche automatique, 40 sur la figure 3, qui permet d'obtenir l'accrochage sur la distance D recherchée notamment lors de la mise sous tension du radioaltimètre, au moyen d'un test systématique pour des valeurs de pente p croissantes ou décroissantes.

La figure 5 montre les performances du radar selon l'invention. On a fait figurer quatre courbes exprimant des nivaux, en dB, en fonction de la distance D sur une échelle logarithmique. La courbe 41 en trait interrompu représente le bruit d'autoéblouissement du radar avec compensation (réglage) statique seulement ; la courbe 42 en trait interrompu est celle du bruit d'autoéblouissement avec compensations statique et dynamique ; la courbe 44 en trait mixte représente le niveau de bruit thermique du radar. La courbe 43 en trait plein, située entre les courbes 41 et 42, représente le niveau des signaux utiles les plus faibles. On constate que le rapport signal sur bruit S/B, qui est la différence d'ordonnées entre les courbes 42 et 43, varie de 30dB à 10dB lorsque D varie de 100 m à 3 m.

La figure 6 représente un deuxième mode de réalisation de l'invention dans lequel on utilise un coupleur 3dB 48. Les mêmes éléments que ceux de la figure 3 portent les mêmes références. Le coupleur 3dB 48 cumule les fonctions assurées par le circulateur 3 et le coupleur 6 de la figure 3. Le dispositif de la figure 6 comporte trois isolateurs : un isolateur 49 dans la voie d'émission, un isolateur 51 dans la voie d'oscillation locale et un isolateur 52 dans la voie de réception du signal utile. On notera que ces isolateurs sont surtout utiles pour améliorer la sensibilité aux distances élevées mais ne sont pas indispensables pour les distances faibles. Le déphaseur réglable 20, encore facultatif, est ici disposé dans la voie de réception.

La voie d'oscillation locale 7 comporte, entre le coupleur 3dB 48 et le mélangeur 5, qui est de préférence un mélangeur symétrique du type 4λ/4, un coupleur 12 dB 53 faisant office d'atténuateur, le déphaseur 54 pour l'asservissement en phase de l'oscillation locale constitué par une diode varicap et, de préférence, l'isolateur 51. La boucle d'asservissement comporte un amplificateur opérationnel 55 suivi par un découplage hyperfréquence constitué du condensateur 56 et de l'inductance 57.

Dans la configuration du radar de la figure 6, un couplage parasite supplémentaire doit être pris en compte : il s'agit de la réflexion du signal d'émission sur le coupleur 12 dB 53, dont le trajet est référencé 58. Ce signal parasite peut être compensé statiquement car son trajet est, pour l'essentiel, indépendant de la voie d'oscillation locale ; sur la figure 4, il est représenté par le vecteur en trait interrompu 59, le couplage parasite de réflexion d'antenne étant représenté par le vecteur en trait interrompu 17'. Les couplages principaux pour le radar de la figure 6 sont par exemple les suivants :
- réflexion d'antenne : 21 dB pour un coefficient de réflexion de - 15 dB ;
- réflexion du coupleur 12 dB 53 : - 21 dB pour un coefficient de réflexion de - 15 dB ;
- fuite du coupleur 3 dB 48 : - 25 dB ;
- fuite du mélangeur et réflexion de l'isolateur de réception : - 45 dB.

La réduction statique consiste en un réglage des longueurs de lignes parcourues par les deux couplages dominants de - 21 dB. De préférence, l'antenne 2 est placée très près du coupleur 3 dB 48 et elle comporte une adaptation, c'est-à-dire qu'une ligne placée devant l'antenne permet d'égaliser les retards de ces deux réflexions. La longueur des deux trajets parasites 14 et 58 est ensuite ajustée sur celle de l'oscillation locale (trajet 15). Au cas où le déphasage du vecteur résultant 17 par rapport au vecteur 16 serait trop élevé, à ce stade du réglage statique, on introduit le déphaseur 20, on mesure sa longueur électrique équivalente et on corrige en conséquence la longueur de la ligne 4 et/ou 7, puis on règle la phase relative entre les deux signaux d'entrée du mélangeur 5 pour la ramener à une valeur de l'ordre de 5 à 10 degrés. Après ces réglages, la compensation dynamique peut s'effectuer de façon analogue à ce qui est décrit ci-dessus en référence à la figure 3. Après compensation dynamique, dans les deux cas, le niveau des signaux parasites est réduit à la valeur : - 66 dB - 40 logD, ce qui entraîne un rapport signal sur bruit : S/B = 6dB + 20 logD. On notera que la prédominance du vecteur d'oscillation locale sur la résultante des vecteurs parasites assure une puissance relativement constante sur les diodes du mélangeur 5 et donc une adaptation large bande de ce dernier ; par exemple une variation de 10 dB de la réflexion d'antenne ne produit qu'une fluctuation de 3 dB de la puissance totale. De préférence, la diode varicap 54 est placée, en série dans la ligne de transmission de l'oscillation locale, à un endroit tel que sa variation de capacité produise un déphasage important. Cette position peut être définie par la phase du coefficient de réflexion de l'isolateur 51. Le déphaseur agit ainsi sur 90° environ, ce qui permet de compenser des échos extérieurs importants tels que ceux créés par des gouttes d'eau sur l'antenne. L'amplificateur opérationnel 55, quant à lui, joue en même temps le rôle de filtre ; son gain est de 100 dB à 10 Hz en boucle ouverte et décroît de 20 dB par décade pour les fréquences supérieures.

Pour les radars des figures 3 et 6, on peut obtenir des blocs hyperfréquences très compacts avec des lignes courtes en utilisant la technique des circuits imprimés. Lorsque des cartes de circuits imprimés sont obtenues après réglages des longueurs de lignes 4, 7 comme indiqué ci-dessus, il est possible de produire en série ces cartes avec une bonne précision. L'antenne peut aussi être une antenne imprimée, telle l'antenne du type 122 de la Société français T.R.T. En tenant compte des dilatations du verre téflon par exemple, la longueur électrique d'une ligne microstrip de 50 Ω est stable à 1 % près sur une gamme de températures allant de - 50°C à 75°C. Si l'on considère cette incertitude sur une ligne d'oscillation locale de 50 cm et en supposant la réflexion de l'antenne stable, la variation de longueur électrique correspondante est de 5 mm, ce qui se traduit par un déphasage de 15° seulement pour une fréquence d'émission de 4,3 GHz.

L'invention s'applique de préférence à des armes intelligentes, telles que des missiles, sur lesquelles on dispose de peu de place et où l'utilisation d'une antenne unique au lieu de deux est souhaitable ; pour cette application, l'appareil selon l'invention est utilisé de préférence comme un radioaltimètre permettant de mesurer des altitudes comprises entre 3 et 1000 m environ. Cet appareil peut aussi être utilisé comme un radar, du fait de son antenne unique qu'il est facile de rendre mobile, pour la détection de cibles ponctuelles. Dans ce dernier cas, la puissance reçue se déduit de la formule :

EP 0 258 917 B1

$$P_r = \frac{G^2 . \delta_R . \lambda^2}{(4\pi)^3 . D^4} P_e \qquad (12)$$

avec :

$\delta_R$ : surface équivalente radar.

Le radar selon l'invention peut détecter des cibles de surface équivalente de 1 m$^2$ et plus, mais avec une portée maximale de 100 m au-delà de laquelle le bruit thermique devient prépondérant sur le bruit d'autoéblouissement. Pour assurer la mesure de distances plus élevées, une antenne de fort gain, ou encore, une puissance émise plus importante, devient nécessaire.

Il est possible d'étendre la portée du radar selon l'invention à des distances inférieures à 3 m en augmentant la valeur de la fréquence de wobulation $\Delta F$, en la portant à 300 MHz par exemple, et en choisissant une antenne dont le coefficient de réflexion a une phase linéaire sur une large bande passante, telle par exemple l'antenne de type 140 de la Société T.R.T. qui présente une bonne adaptation sur une plage de 400 MHz.

## Revendications

1. Système de radar du type à onde continue modulée en fréquence (FM/CW), destiné à des mesures de distance, comportant connectés en série un générateur de signal hyperfréquence modulé linéairement en fréquence, une antenne émettrice-réceptrice et des moyens de dérivation ayant une voie dite d'oscillation locale et une voie de réception pour prélever respectivement un signal fraction du signal hyperfréquence émis et un signal de l'onde reçue en écho d'une cible et pour transmettre lesdits deux signaux prélevés aux entrées d'un mélangeur qui déliore un signal de battement soustractif utile représentatif de la distance D de la cible, système, dans lequel les longueurs des lignes de transmission présentes dans lesdites deux voies sont ajustées pour qu'au moins le signal de couplage parasite interne dû à la réflexion d'antenne présente jusqu'au mélangeur le même temps de propagation que le signal de la voie d'oscillation locale, caractérisé en ce qu'une boucle d'asservissement de phase comportant un amplificateur et un filtre passe-bas est connectée entre la sortie dudit mélangeur et une entrée de commande d'un circuit déphaseur commandé, disposé dans la voie d'oscillation locale, la fréquence de coupure en boucle fermée dudit asservissement étant juste inférieure à la fréquence du signal de battement soustractif utile entre ondes émise et reçue fourni en sortie du mélangeur.

2. Système de radar selon la revendication 1 comportant des moyens de réglage statique de la phase entre les signaux desdites deux voies constitués par un déphaseur réglable.

3. Système de radar selon la revendication 1 ou 2 dans lequel lesdits moyens de dérivation sont constitués par un coupleur, en ce qui concerne la voie l'oscillation locale, et par un circulateur pour la voie de réception de l'onde reçue en écho.

4. Système de radar dans lequel lesdits moyens de dérivation sont constitués par un coupleur 3 dB et dont la voie d'oscillation locale comporte un coupleur faisant office d'atténuateur de signal, selon la revendication 2, caractérisé en ce que le réglage statique prend en compte le couplage parasite engendré par la réflexion du signal émis sur ledit coupleur faisant office d'atténuateur.

5. Système de radar selon l'une des revendications 1 à 4 dont le mélangeur est un mélangeur symétrique du type $4\lambda/4$ à deux sorties et dont ledit circuit déphaseur est constitué par une diode varicap.

6. Système de radar selon l'une des revendications 1 à 5 caractérisé en ce que ledit amplificateur et ledit filtre passe-bas sont constitués ensemble par un amplificateur opérationnel.

7. Système de radar selon l'une des revendications 1 à 6 caractérisé en ce qu'il comporte des moyens d'ajustage automatique de ladite fréquence de coupure $f_c$ en fonction de la distance D à mesurer, qui commandent ledit filtre passe-bas.

8. Système de radar selon la revendication 7 caractérisé en ce que lesdits moyens d'ajustage automatique sont eux-mêmes commandés par un dispositif de recherche automatique destiné à obtenir

10

l'accrochage dudit système de radar sur au moins une distance D recherchée.

9. Système de radar selon l'une des revendications 1 à 8 caractérisé en ce que les lignes portant les signaux hyperfréquence sont réalisées par utilisation de la technique des circuits imprimés.

**Claims**

1. Radar system of the frequency modulated continuous wave type (FM/CW), intended for range measuring, including a series combination of a generator for providing a linearly frequency modulated microwave signal, a transceiver antenna, and deriving means having a channel called local oscillation channel and a receive channel for deriving a fractional signal of the transmitted microwave signal and a received echo signal from a target respectively, and for transmitting said two derived signals to the inputs of a mixer which delivers a useful subtractive beat signal representing the range D of the target, in which system the transmit line lengths present in said two channels are adjusted so that at least the internal parasitic coupling signal owing to the antenna reflection has, up to the mixer, the same propagation time as the signal of the local oscillation channel, characterized in that a phase control loop comprising an amplifier and a low pass filter is connected between the output of said mixer and a control input of a controllable phase-shifting circuit placed in the local oscillation channel, the closed loop cut-off frequency of said control loop being slightly lower than the frequency of the useful subtractive beat signal between the transmitted and received waves provided at the output of the mixer.

2. Radar system as claimed in Claim 1, comprising control means for statically controlling the phase between the signals of said two channels, constituted by an adjustable phase shifter.

3. Radar system according to Claim 1 or 2, in which said deriving means are constituted by a coupler, for deriving the local oscillation channel, and by a circulator for the derivation channel of the received echo wave.

4. Radar system in which said deriving means are constituted by a 3 dB coupler and whose local oscillation channel includes a coupler acting as an attenuator, as claimed in Claim 2, characterized in that the static adjustment takes into account the parasitic coupling caused by the reflection of the transmitted signal on said coupler acting as an attenuator.

5. Radar system as claimed in any of Claims 1 to 4, in which the mixer is a symmetrical $4\lambda/4$ type mixer with two outputs and of which said phase-shifting circuit comprises a varicap diode.

6. Radar system as claimed in any of Claims 1 to 5, characterized in that said amplifier and said low-pass filter are collectively formed by an operational amplifier.

7. Radar system as claimed in any of Claims 1 to 6, characterized in that it includes automatic means for adjustment of said cut-off frequency $f_c$ as a function of the range D to be measured, said means controlling the low-pass filter.

8. Radar system as claimed in Claim 7, characterized in that said automatic means for adjustment are themselves controlled by an automatic search device intended to obtain the locking of said radar system onto at least one sought range D.

9. Radar system as claimed in any of Claims 1 to 8, characterized in that the lines carrying the microwave frequency signals are produced using the printed circuit technique.

**Patentansprüche**

1. Radarsystem vom frequenzmodulierten Dauerstrichtyp ((FM/CW) zur Entfernungsmessung mit, hintereinander liegend, einem linear frequenzmodulierten Höchstfrequenzsignalgenerator, einer Sende-Empfangsantenne und Ableitmitteln mit einer sog. Ortsoszillationsstrecke und einer Empfangsstrecke zum Ableiten eines Teilsignals von dem ausgestrahlten Höchstfrequenzsignal bzw. eines Signals von der von einem Ziel empfangenen Echowelle und zum Zuführen der beiden genannten abgeleiteten Signale zu Eingängen einer Mischstufe, die ein nützliches, für die Entfernung repräsentatives, subtraktives Schwebungssignal liefert, wobei die Längen der Übertragungsleitungen in den beiden Strecken derart eingestellt sind, daß mindestens das innere wilde Kopplungssignal durch die Reflexion der Antenne bis an die Mischstufe dieselbe Fortpflanzungszeit hat als das Signal der Ortsosziilationsstrecke, dadurch gekennzeichnet, daß eine Phasenregelschleife mit einem Verstärker und einem Tiefpaßfilter zwischen dem Ausgang der genannten Mischstufe und einem Steuereingang eines gesteuerten Phasenschiebers in der Ortsoszillationsstrecke vorgesehen ist, wobei die Grenzfrequenz der geschlossenen Schleife gerade unterhalb der Frequenz des nützlichen subtraktiven Schwebungssignals zwischen den ausgestrahlten und empfangenen Wellen am Ausgang der Mischstufe liegt.

2.  Radarsystem nach Anspruch 1 mit Mitteln zur statischen Regelung der Phase zwischen den Signalen der genannten zwei Strecken, wobei diese Mittel aus einem regelbaren Phasenschieber bestehen.

3.  Radarsystem nach Anspruch 1 oder 2, wobei die genannten Ableitmittel im Falle der Ortsoszillationsstrecke aus einer Kopplungsanordnung und im Falle der Empfangsstrecke der empfangenen Echowelle aus einem Zirkulator bestehen.

4.  Radarsystem, bei dem die genannten Ableitmittel aus einer Kopplungsanordnung von 3 dB bestehen und wobei die Orstoszillationsstrecke eine als Signaldämpfungsglied wirksame Kopplungsanordnung aufweist, nach Anspruch 2, dadurch gekennzeichnet, daß die statische Regelung die Interferenzkopplung berücksichtigt, die durch die Reflexion des über die genannte als Dämpfungsglied wirksame Kopplungsanordnung ausgestrahlten Signals verursacht wird.

5.  Radarsystem nach einem der Ansprüche 1 bis 4, wobei die Mischstufe eine symmetrische Mischstufe vom Typ 4λ/4 mit zwei Ausgängen ist und der Phasenschieber aus einer Kapazitätsdiode besteht.

6.  Radarsystem nach einem der Ansprüche 1 bis 5, dadurch gekennzeichnet, daß der genannte Verstärker und das genannte Tiefpaßfilter zusammen durch einen Operationsverstärker gebildet werden.

7.  Radarsystem nach einem der Ansprüche 1 bis 6, dadurch gekennzeichnet, daß automatische Einstellmittel zum Einstellen der genannten Grenzfrequenz $f_c$ als Funktion der zu messenden Entfernung D vorhanden sind, die das genannte Tiefpaßfilter steuern.

8.  Radarsystem nach Anspruch 7, dadurch gekennzeichnet, daß die genannten automatischen Einstellmittel selbst von einer automatischen Suchanordnung gesteuert werden, die dazu bestimmt ist, die Verriegelung des genannten Radarsystems auf mindestens eine ermittelte Entfernung D zu erzielen.

9.  Radarsystem nach einem der Ansprüche 1 bis 8, dadurch gekennzeichnet, daß die Leitungen für die Höchstfrequenzsignale durch Anwendung der gedruckten Schaltungstechnik verwirklicht worden sind.

FIG.1a

FIG.2a

FIG.1b

FIG.2b

EP 0 258 917 B1

FIG.3

FIG.6

FIG.5

FIG. 4